# EUROPÄISCHE PATENTANMELDUNG

(11) **EP 2 859 930 A2**
(43) Veröffentlichungstag der Anmeldung: **15.04.2015**
(21) Anmeldenummer: 14003470.3
(22) Anmeldetag: 09.10.2014
(51) Int. Cl.: B01D 33/21, B01D 33/073

(54) **Filter zum kontinuierlichen Filtern einer Suspension unter Druck**

(30) Priorität: 11.10.2013 AT 7842013
(71) Anmelder: Andritz AG, 8045 Graz (AT)
(72) Erfinder: Prader, Rainer, Dr., A-8046 Stattegg (AT)
(74) Vertreter: Schweinzer, Friedrich

(57) **Zusammenfassung**

Die Erfindung betrifft Filter zum kontinuierlichen Filtern einer Suspension unter Druck mit einem Druckbehälter (1), drehbaren Filterelementen (2), die in dem Druckbehälter (1) angeordnet sind, wobei ein Filterelement (2) für jede Drehung einen Filterzyklus durchläuft, der Filterzonen in flüssiger und gasförmiger Phase aufweist, weiters mit Filtratkanälen (4') die zwischen den Filterelementen (2) und getrennten Filtratauslässen (14', 14", 215) für jede Filterzone verbunden sind, sowie einer Einrichtung zur Steuerung der einzelnen Filtratzonen mittels Steuerscheibe (44), wobei die Steuerscheibe (44) Filtratauslässe für flüssige und gasförmige Phase aufweist. Sie ist vornehmlich dadurch gekennzeichnet, dass in Richtung des Filterzyklusses gesehen vor dem Filtratauslass der flüssigen Phase eine Entlüftungszone (46) vorgesehen ist. Damit kann in günstiger Weise die in den Filterelementen (2) und Filtratrohren (4') enthaltene Druckluft abgeführt und entspannt werden.

## Beschreibung

Die Erfindung betrifft ein Filter zum kontinuierlichen Filtern einer Suspension unter Druck mit einem Druckbehälter, drehbaren Filterelementen, die in dem Druckbehälter angeordnet sind, wobei ein Filterelement für jede Drehung einen Filterzyklus durchläuft, der Filterzonen in flüssiger und gasförmiger Phase aufweist, weiters mit Filtratkanälen die zwischen den Filterelementen und getrennten Filtratauslässen für jede Filterzone verbunden sind, sowie einer Einrichtung zur Steuerung der einzelnen Filtratzonen mittels Steuerscheibe, wobei die Steuerscheibe Filtratauslässe für flüssige und gasförmige Phase aufweist.

Filter der obengenannten Art werden als Druckfilter zur Entwässerung von u.a. Faserstoffsuspensionen aber vermehrt auch von Suspensionen mit mineralischen Feststoffen wie Kohle oder Erzen eingesetzt um einen höheren Entwässerungsgrad, d.h. einen höheren Trockengehalt zu erzielen. Ein Beispiel eines Druckfilters für Faserstoffsuspensionen ist in der DE 36 14 668 A1 beschrieben. Hier ist ein Druckscheibenfilter gezeigt, wobei aber auch grundsätzlich Drucktrommelfilter angewandt werden können. Ein Filtrationszyklus besteht üblicherweise aus der sogenannten Kuchenbildung, d.h. Aufbau eines Filterkuchens bzw. bei Faserstoffsuspensionen einer Filtermatte am Filterelement. Im Folgenden wird allgemein von Filterkuchen gesprochen, wobei dies jedoch auch in gleicher Weise eine Filtermatte aus Faserstoffen umfasst. Diese Kuchenbildung kann auch in mehreren Stufen erfolgen, wie dies die DE 36 14 668 A1 beschreibt. Eine weitere Variante eines Druckfilters ist in der EP 0 596 857 A1 beschrieben. Nach Aufbau des Filterkuchens wird dieser mit Luft durchgeblasen. Bei Vakuumfiltern wird hier die im Filterkuchen enthaltene Flüssigkeit abgesaugt, bei Druckfiltern durch den höheren Druck hindurchgedrückt. Als nächste Stufe im Filtrationszyklus kann noch eine Wäsche des Filterkuchens vorgesehen sein, wobei dann auch hier die Waschflüssigkeit durch die am Filterelement anliegende Druckdifferenz (Vakuum oder Kesselinnendruck) wieder aus dem Filterkuchen entfernt wird. Anschließend wird der Filterkuchen vom Filterelement entfernt, wobei dies durch Wasser- oder Luftstrahlen (Fasermatte), einen Druckluftrückstoß oder Schaber erfolgen kann. Dann beginnt ein neuer Filtrationszyklus. Zu Beginn des Filtrationszyklus muss nun gewährleistet sein, dass Filterzelle und Filtratrohr, an dem auch mehrere Filterzellen angeordnet sein können, entlüftet ist. Im Fall der Druckfiltration steht das Volumen der Filterzelle(n) und des Filtratrohres unter dem Arbeitsdruck im Kessel. Dadurch erfolgt die Entlüftung durch die Druckentspannung auf den außerhalb des Kessels herrschenden Atmosphärendruck am Beginn der Kuchenbildungszone schlagartig und führt zu erheblichen Druckschlägen, Verwirbelungen und Turbulenzen in der Kuchenbildungszone. Die expandierende Luftmenge ist dabei üblicherweise volumenmäßig erheblich größer als die abzuführende Filtratmenge in der Kuchenbildungszone.

Ziel der Erfindung ist es nun eine Vorrichtung anzubieten, die diesen Nachteil verhindert.

Die Erfindung ist daher dadurch gekennzeichnet, dass in Richtung des Filterzyklusses gesehen vor dem Filtratauslass der flüssigen Phase (Kuchenbildungszone) eine Entlüftungszone vorgesehen ist. Durch diese gesonderte Abführung der Systemluft vor der eigentlichen Kuchenbildung kann die Kuchenbildungszone beruhigt werden, was zu einem wesentlich gleichmäßigeren Kuchenaufbau führt, da die Druckschläge vermieden werden.

Eine vorteilhafte Weiterbildung der Erfindung ist dadurch gekennzeichnet, dass die getrennten Filtratauslässe mit Abscheidebehältern verbunden sind, die auf einem niedrigeren Niveau angeordnet sind, wobei die Abscheidebehälter über sogenannte barometrische Fallrohre, die eine vertikale Länge von 6 bis 10 m aufweisen, mit den Filtratauslässen verbunden sein können. Durch die barometrischen Fallrohre auch barometrischer oder geodätischer Fuß genannt, entsteht ein zusätzlicher Saugdruck in der Kuchenbildungszone, der in weiterer Folge zu einer besseren Entwässerung und/oder zu einer erhöhten Durchsatzleistung führt.

Eine günstige Ausgestaltung der Erfindung ist dadurch gekennzeichnet, dass die Entlüftungszone über eine getrennte Leitung mit dem Abscheidebehälter verbunden ist. Dadurch kann gewährleistet werden, dass die expandierende Druckluft aus dem System getrennt abgeführt wird und in weiterer Folge in den Fallrohren nahezu ausschließlich eine Flüssigkeitssäule existiert, wodurch der barometrische Saugdruck gewährleistet bleibt. Ist in den Fallrohren zuviel Luft enthalten, würde diese Flüssigkeitssäule abreißen und es könnte sich kein Saugdruck aufbauen.

Die Erfindung wird nun anhand der Zeichnungen beispielhaft beschrieben, wobei
Fig. 1 eine Druckfiltrationsanlage nach dem Stand der Technik,
Fig. 2 den Aufbau eines Steuerkopfes nach dem Stand der Technik
Fig. 3 eine Steuerscheibe gemäß der Erfindung, und
Fig. 4 eine schematische Ansicht einer Anordnung gemäß der Erfindung darstellt.

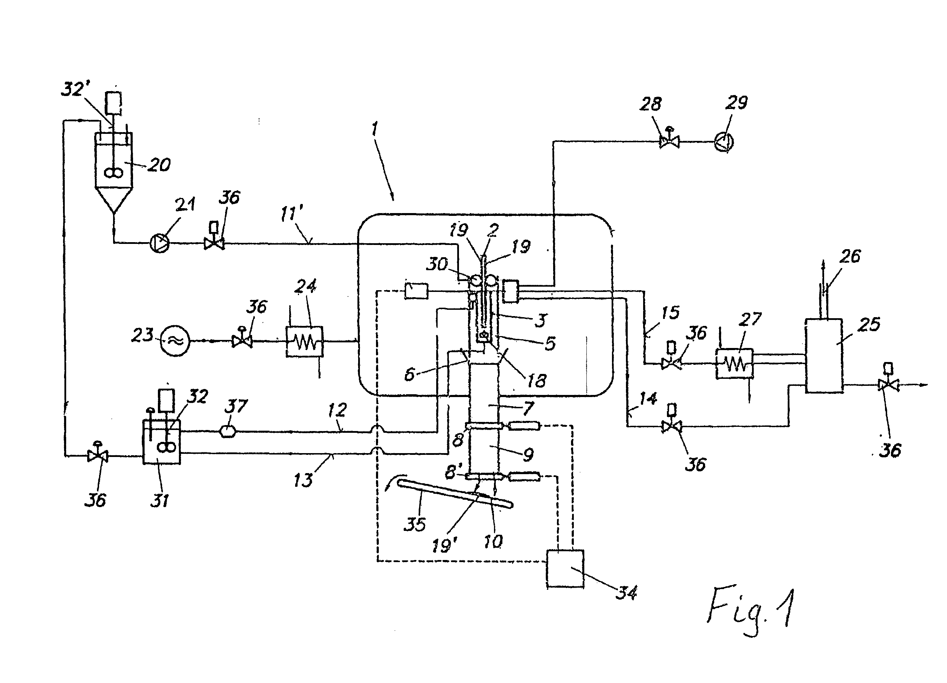

Fig. 1 zeigt ein Druckfilter anhand eines Scheibenfilters beispielhaft mit einer Filterscheibe nach dem Stand der Technik. Die Erfindung lässt sich natürlich auch auf Scheibenfiltern mit mehreren Filterscheiben oder Trommelfiltern, bei denen die Filterzellen über den Umfang einer Trommel angeordnet sind, anwenden. Bei diesem Druckfiltrationssystem wird beispielweise mineralische Suspension aus einer Erz- oder Kohleaufbereitung aus einem Vorratsbehälter 20 mit Rührwerk 32' bei entsprechendem Vordruck von der Pumpe 21 angesaugt und von oben über eine Filtrataufgabevorrichtung 30 in den Filtertrog 3 gepumpt.

Der Filtertrog 3 ist in einem Druckkessel 1 installiert. Der Trog 3 wird zur Vermeidung von Feststoffaufkonzentrationen mit permanentem Überlauf 12 und Ablauf 13 gefahren. Die Durchströmung des Filtertroges 3 mit Trübe bzw. die Trübehomogenisierung wird durch ein Rührwerk 18 unterstützt. Der Förderstrom der Trübezufuhrpumpe 21 stellt sich durch den über einen Frequenzumformer geregelten Elektromotor in Abhängigkeit der Trübeüberlaufmenge automatisch ein. Die Trübeüberlaufmenge wird durch eine Durchflussmessstelle 37 erfasst. Der Überlaufstrom 12 und der Ablaufstom 13 fließen mit gravimetrischem Gefälle in einen als Druckrührbehälter ausgebildeten

Suspensionssammelbehälter 31 mit Rührwerk 32. Aus dem Druckbehälter 31 kann Trübe über eine (nicht dargestellte) niveaugesteuerte Pumpe mit abgetauchtem Ansaugrohr oder nur mittels Druckgefälle zurück in den Vorlagebehälter gefördert werden. Als Arbeitsmedium wird dem Filter 2 Druckluft aus einer Druckluftstation, z.B. einem Luftkompressor 23 zugeführt. Die Luft kann vor Eintritt in den Druckraum noch mittels eines Erhitzers 24 auf die notwendige Temperatur gebracht werden. Der Filter 2 ist eine auf der Welle rotierende hohle Filterscheibe mit aneinandergrenzenden getrennten Sektoren, deren Innenräume jeweils mit einer gesonderten Filtratabführung versehen sind. Die Welle ist in üblicher Weise auf einer Seite der Filterscheibe als Hohlwelle ausgebildet, in deren Innerem die Filtratabführleitungen geführt sind und in, in einer Stirnabdeckscheibe der Hohlwelle angeordnete, Abgabeöffnungen münden, die in gleichen Abständen voneinander entlang eines Kreisumfangs angeordnet sind. Die Stirnabdeckscheibe bildet den rotierenden Teil des Steuerkopfs. Alternativ können die Filtratableitungen auch als außen am Wellenumfang angeordnete Filtratrohre, die in die, in der Stirnabdeckscheibe der Hohlwelle angeordneten, Abgabeöffnungen münden, ausgeführt sein.

Im Betrieb der Filterscheibe 2 wird im Eintauchbereich der Filterscheibe 2 in die im Filtertrog 3 befindliche Feststoff-/Flüssigkeitsmischung dahingegen gefiltert, dass Flüssigkeit durch die Filterschicht in das Innere der betroffenen Sektoren gedrückt wird, während sich an der Filteroberfläche Feststoff als Schicht 19 (Filterkuchen) ansammelt. Im Druckkessel 1 außerhalb des Eintauchbereichs der Filterscheibe 2 wird Druckgas durch die aufgebaute Feststoffschicht hindurchgedrückt und führt die noch in der Feststoffschicht (Filterkuchen) befindliche Flüssigkeit ins Innere der betroffenen Sektoren ab.

Somit fällt beim Filtervorgang einerseits praktisch reine Flüssigkeit - das Kuchenbildungsfiltrat - und andererseits ein Gas-/Flüssigkeitsgemisch - das Entfeuchtungsfiltrat - an, dessen Flüssigkeitsanteil in der Regel um so geringer wird, je länger der betreffende Sektor aus dem Filtertrog 3 aufgetaucht ist.

Im Regelfall werden Kuchenbildungsfiltrat und Entfeuchtungsfiltrat voneinander getrennt abgeführt. Dazu weist der Steuerkopf eine feststehende Gegenscheibe zur Stirnabdeckscheibe der Hohlwelle auf, an der die Stirnabdeckscheibe satt anliegend gleitet und die mit Umfangsschlitzen ausgestattet ist, die einerseits die Abgabeöffnungen der Stirnabdeckscheibe, die Kuchenbildungsfiltrat führen, und andererseits die Abgabeöffnungen der Stirnabdeckscheibe, die Entfeuchtungsfiltrat führen, zusammenfassen, so dass die beiden Filtrate im Wesentlichen über gesonderte Ableitungen geführt werden können.

Das Kuchenbildungsfiltrat 14 mit möglichst geringen Anteilen an Luft strömt in einen Filtratabscheider 25, in den ebenfalls das Entfeuchtungsfiltrat 15 nach Kühlung im Luft-/Gaskühler 27, in dem Kondensat gebildet wird, eingeleitet wird. Der Abluftstrom strömt am Filtratabscheider 25 bei 26 oben aus. Das abgeschiedene Filtrat-/Kondensatgemisch kann entsprechend entsorgt werden. Der entwässerte Feststoff (z.B. Erz-, Kohlekonzentrat) wird durch eine Schieberschleuse 7, 8, 8', 9 ausgetragen. Der von der Filterscheibe 2 z.B. mittels Snap-blow Ventil 28 und Druckluft aus dem Snap-blow Kompressor 29 abgenommene Filterkuchen fällt dabei über beidseitig der Filterscheibe 2 angebrachte Ausfallschächte 5 in einen Ausfalltrichter 6. Die Snap-blow Ablösung von Filterkuchen ist ein bekanntes Verfahren, bei dem das Filtermaterial durch einen Druckluftstoß ruckartig entgegen der Filtrierrichtung ausgebeult wird, was den entwässerten Filterkuchen um Abplatzen bringt. Alternativ kann der Filterkuchen auch durch Schaber vom Filtertuch abgeschabt und in den Ausfalltrichter 6 eingebracht werden. Vom Ausfalltrichter 6 gelangt der Filterkuchen in den Schleusenvorlagebehälter 7. Abwechselnd wird nun ein Schleusenschieber 8, 8' geöffnet bzw. geschlossen, wodurch der Filterkuchen erst in die Schleusenzwischenkammer 9 und anschließend zum Filterkuchenaustrag 10 gelangt. Die Schleusenschieber 8, 8' werden durch ein Hydraulikaggregat 34 betrieben. Der ausgetragene Filterkuchen 19' wird z.B. von einem Förderband 35 abtransportiert. Die Mengen an Luft, Dampf, Suspensionszufuhr, - überlauf, - abzug sowie Filtratmenge können durch Regelventile 36 gesteuert bzw. die entsprechenden Leitungen auch gänzlich abgesperrt werden.

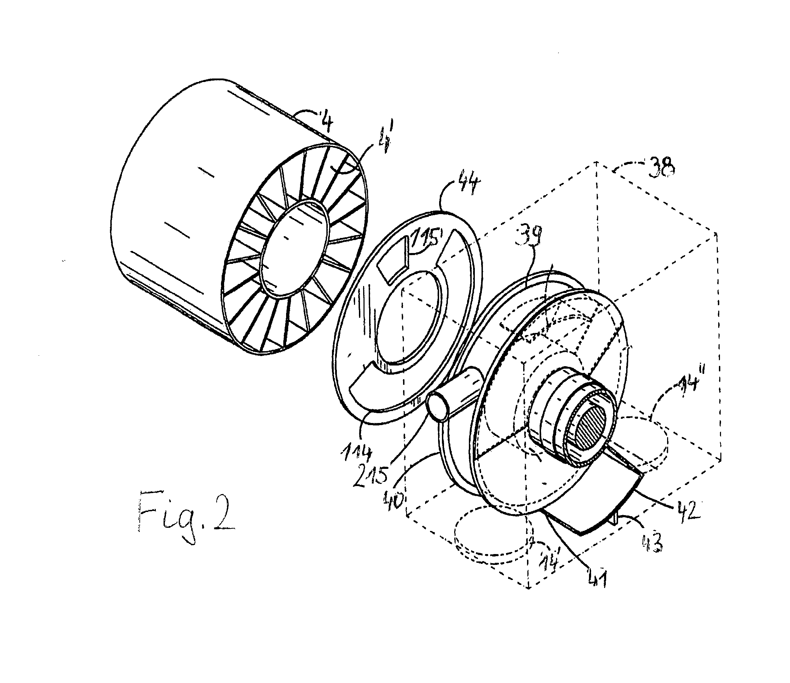

Fig. 2 zeigt schematisch den Aufbau eines Steuerkopfes mit Steuerscheibe und Filterwelle.

Der Steuerkopf ist generell mit 38 bezeichnet. Die Abfuhr des Entfeuchtungsfiltrates erfolgt über Stutzen (Leitung) 215, während das Kuchenbildungsfiltrat in ein Trübfiltrat mit Trübfiltratauslass 14" und ein Klarfiltrat mit Klarfiltratauslass 14' aufgeteilt wird. Die Stutzen bzw. Rohrleitungen 14', 14" sind als barometrische Fallrohre ausgeführt und in weiterer Folge mit einem Filtratabscheider (nicht dargestellt) verbunden. Der Steuerkopf 38 besteht im Wesentlichen aus einem hohlzylindrischen Teil 39 mit einem Flansch 40 an der Eintrittseite und einem Flansch 41 an der Austrittseite. Hier wird speziell durch einen Splitter 42 mit Dichtleiste 43 eine gewünschte Verteilung von Trübfiltrat 14" und Klarfiltrat 14' erzielt. Die Filterwelle 4 ist mit einzelnen Filtratablaufkanälen 4' ausgestattet, wobei alternativ auch eine Welle mit geringerem Durchmesser und außen liegenden Filtratrohren Anwendung finden kann. Durch die Filtratablaufkanäle 4' wird die Flüssigkeit aus den einzelnen Filtersegmenten gesammelt und an das Ende des Filters geführt, wo es dem Steuerkopf 38 zugeführt wird. Das Filtrat läuft dabei durch eine Steuerscheibe 44, die den zeitlichen Ablauf von Kuchenbildung und Entfeuchtung sowie Kuchenabblasung regelt. Hier ist die Kuchenbildungszone 114 gegenüber der Entfeuchtungszone 115 sehr lange ausgebildet, da hier der Trockengehalt des Feststoffes nur eine untergeordnete Rolle spielt gegenüber der Rückgewinnung des (Klar-) Filtrats.

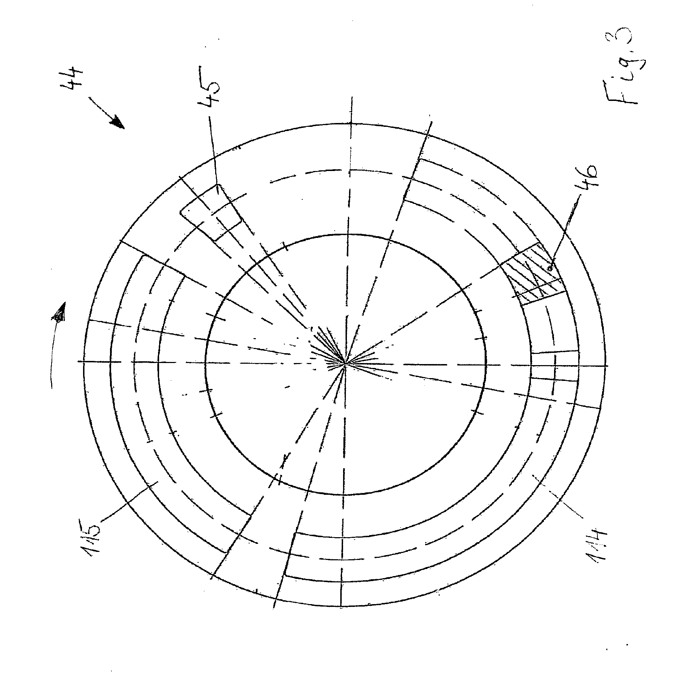

Fig. 3 zeigt nun eine Steuerscheibe 44 analog der Steuerscheibe in Fig. 2. Die Steuerscheibe weist eine Entfeuchtungszone 115 sowie eine Kuchenbildungszone 114 auf. Während sich die Kuchenbildungszone 14 im Betrieb im Wesentlichen unter dem Flüssigkeitsspiegel der zu entwässernden Suspension befindet, befindet sich die Entfeuchtungszonel 15 oberhalb dieses Niveaus. Dadurch ergibt sich, dass im Kuchenbildungsfiltrat wenig Luft, im Entfeuchtungsfiltrat aber primär Luft enthalten ist. Nach dem Trockensaugen des Filterkuchens in der Entfeuchtungszone 15 erfolgt ein Druckluftrückstoß über die Öffnung 45 in der Steuerscheibe 44. In Richtung des Filterzyklusses ist vor der Kuchenbildungszone 114 eine Entlüftungszone 46 angeordnet. Diese dient dazu, die im Filtersegment und dem zugehörigen Filtratrohr (Filtratkanal) 4' enthaltene Druckluft auf Atmosphärendruck zu entspannen ohne mit der Kuchenbildungszone 114 in Kontakt zu kommen. Da hier nur Luft vorhanden ist kann somit auch der Verschleiß der Eintrittskante der Kuchenbildungszone 114 verhindert und damit die Lebensdauer der Steuerscheibe 44 und des Steuerkopfes wesentlich erhöht werden.

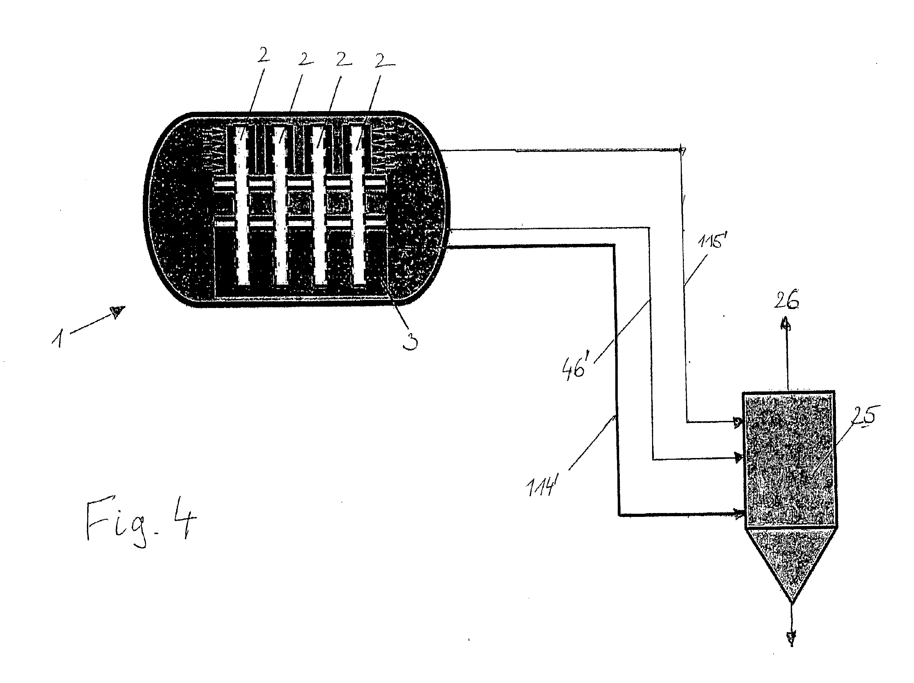

Fig. 4 zeigt schematisch die Anordnung eines Druckfilters mit Druckkessel 1 und beispielhaft Filterscheiben 2, die in einen Filtertrog 3 eintauchen. Grundsätzlich kann natürlich auch ein Trommelfilter eingesetzt werden. Die Kuchenbildungszone ist mit einer Leitung 114' mit einem Filtratabscheider 25 verbunden, wobei der Filtratabscheider 25 auf einem wesentlich niedrigeren Niveau angeordnet ist, als der Druckkessel 1 mit Filtertrog 3, wodurch sich ein sogenanntes barometrisches Fallrohr ergibt. Je nach Aufstellung und Auslegung des Filters kann der Höhenunterschied (und damit die vertikale Länge des barometrischen Fallrohres) zwischen 6 und 10 m betragen. Die Entfeuchtungszone ist mit einer Leitung 115' ebenfalls mit dem Filtratabscheider 25 verbunden. Die erfindungsgemäße Entlüftungszone ist mit einer ebenfalls separaten Leitung 46' mit dem Filtratabscheider verbunden. So kann die gesamte entweichende Luft am oberen Ende des Filtratabscheiders 25 über eine Leitung 26 z.B. ins Freie geleitet werden. Da nunmehr die entspannte (Druck-) Luft aus den Filterelementen und Filtratrohren getrennt abgeführt wird, kann auch ein durchgehender Filtratstrom in der Kuchenfiltratleitung 114' und somit ein zusätzliches Vakuum aufrechterhalten werden.

Dadurch erhöht sich gegenüber dem bisherigen Stand der Technik der effektive Differenzdruck in der Kuchenbildungszone und es kann eine Durchsatzsteigerung von ca. 5-15 % erzielt werden. Weiters kann auch der Winkel für die Entfeuchtungszone vergrößert werden, was zusätzlich zu einer Trockengehaltssteigerung von ca. 1 - 2 % führt.

Speziell durch die Erkenntnis, dass durch die Entspannung der sich in den Filterelementen und Filtratroheren befindlichen Luft sowohl Turbulenzen in der Kuchenbildungszone ergeben als auch kein durchgehender Filtratstrom in den Fallrohren erreicht werden konnte und die nunmehr getrennte Abführung dieser Entspannungsluft in einer separaten Entlüftungszone können erstmals die barometrische Höhe als auch eine turbulenzfreie Suspension zur besseren Entwässerung von insbesondere mineralischen Feststoff-Flüssigkeitssuspensionen genutzt werden.

Die Erfindung ist nicht auf die dargestellten Beispiele beschränkt, sondern kann insbesondere auch bei Trommelfiltern aber auch bei anderen kontinuierlichen Druckfiltern angewandt werden.

## Patentansprüche

1. Filter zum kontinuierlichen Filtern einer Suspension unter Druck mit einem Druckbehälter (1), drehbaren Filterelementen (2), die in dem Druckbehälter (1) angeordnet sind, wobei ein Filterelement (2) für jede Drehung einen Filterzyklus durchläuft, der Filterzonen in flüssiger und gasförmiger Phase aufweist, weiters mit Filtratkanälen (4') die zwischen den Filterelementen (2) und getrennten Filtratauslässen (14', 14", 215) für jede Filterzone verbunden sind, sowie einer Einrichtung zur Steuerung der einzelnen Filtratzonen mittels Steuerscheibe (44), wobei die Steuerscheibe (44) Filtratauslässe für flüssige und gasförmige Phase aufweist, **dadurch gekennzeichnet, dass** in Richtung des Filterzyklusses gesehen vor dem Filtratauslass der flüssigen Phase eine Entlüftungszone (46) vorgesehen ist.

2. Filter nach Anspruch 1, **dadurch gekennzeichnet, dass** die getrennten Filtratleitungen (114',115') mit Abscheidebehältern (25) verbunden sind, die auf einem niedrigeren Niveau angeordnet sind.

3. Filter nach Anspruch 2, **dadurch gekennzeichnet, dass** die Abscheidebehälter über sogenannte barometrische Fallrohre (114', 115'), die eine vertikale Länge von 6 bis 10 m aufweisen, mit den Filtratauslässen verbunden sind.

4. Filter nach einem der Ansprüche 1 bis 3, **dadurch gekennzeichnet, dass** die Entlüftungszone (46) über eine getrennte Leitung (46') mit dem Abscheidebehälter (25) verbunden ist.
